# FASCICULE DE BREVET EUROPEEN

(11) **EP 4 257 492 B1**
(45) Date de publication et mention de la délivrance du brevet: **06.08.2025**
(21) Numéro de dépôt: 23166477.2
(22) Date de dépôt: 04.04.2023
(51) Int. Cl.: B64D 33/10, F02K 1/34, F02K 1/82

(54) **STRUCTURE FIXE INTERNE POUR AÉRONEF COMPORTANT UNE STRUCTURE EN NID D'ABEILLES, UN ÉCHANGEUR THERMO-ACOUSTIQUE, UN CADRE ET DES MOYENS DE FIXATION**
INNERE FESTE STRUKTUR FÜR EIN FLUGZEUG MIT EINER WABENSTRUKTUR, EINEM THERMOAKUSTISCHEN WÄRMETAUSCHER, EINEM RAHMEN UND BEFESTIGUNGSMITTELN
INTERNAL FIXED STRUCTURE FOR AIRCRAFT COMPRISING A HONEYCOMB STRUCTURE, A THERMOACOUSTIC EXCHANGER, A FRAME AND ATTACHMENT MEANS

(30) Priorité: 08.04.2022 FR 2203256
(43) Date de publication de la demande: 11.10.2023
(73) Titulaire: Airbus Operations, 31060 Toulouse (FR)
(72) Inventeur: WESSEL, Philippe, 31060 TOULOUSE (FR); CALIMAN, Laurent, 31060 TOULOUSE (FR); CAZEAUX, Laurent, 31060 TOULOUSE (FR)
(74) Mandataire: Cabinet Le Guen Maillet

(56) Documents cités:
- EP-A1- 3 038 101
- EP-A1- 3 640 467
- US-A1- 2011 126 544
- US-A1- 2012 181 359

## Description

### DOMAINE TECHNIQUE

La présente invention concerne une structure fixe interne pour une nacelle d'un ensemble propulsif d'un aéronef où ladite structure fixe interne comporte une structure en nid d'abeilles, un échangeur thermo-acoustique, un cadre et des moyens de fixation qui assurent la fixation de l'échangeur thermo-acoustique à la structure en nid d'abeilles, un ensemble propulsif comportant une telle structure fixe interne ainsi qu'un aéronef comportant au moins un tel ensemble propulsif. La présente invention concerne également différents procédés de fabrication d'une telle structure fixe interne.

### ÉTAT DE LA TECHNIQUE ANTÉRIEURE

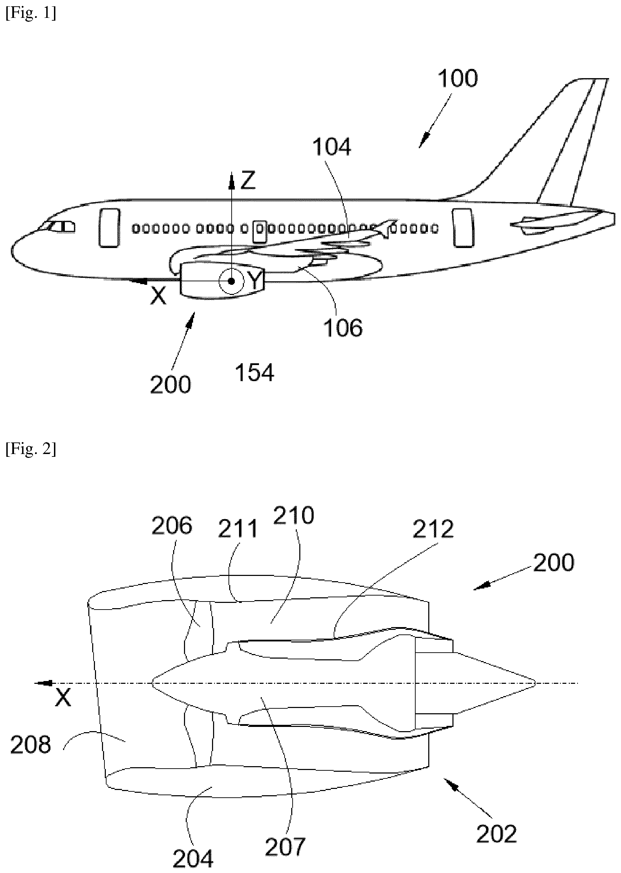

La Fig. 2 est une vue de côté et en coupe d'un ensemble propulsif 200 pour un aéronef. L'ensemble propulsif 200 comporte un turboréacteur 202, une nacelle 204 disposée autour du turboréacteur 202. Le turboréacteur 202 comporte un noyau 207 et une soufflante 206 montée à l'avant du noyau 207. L'air extérieur pénètre dans l'ensemble propulsif 200 par une entrée d'air 208 délimitée par l'avant de la nacelle 204.

Après avoir traversé la soufflante 206, l'air se divise en un flux primaire qui traverse le noyau 207 comportant entre autres un système de combustion, et en un flux secondaire qui circule entre le noyau 207 et la nacelle 204 dans une veine secondaire 210 prévue à cet effet.

La nacelle 204 comporte une structure fixe externe 211 (ou OFS pour « Outer Fixed Structure » en terminologie Anglo-Saxonne) et une structure fixe interne 212 (ou IFS pour

« Inner Fixed Structure » en terminologie Anglo-Saxonne) qui sont concentriques et délimitent entre elles la veine secondaire 210. La structure fixe interne 212 est autour du noyau 207.

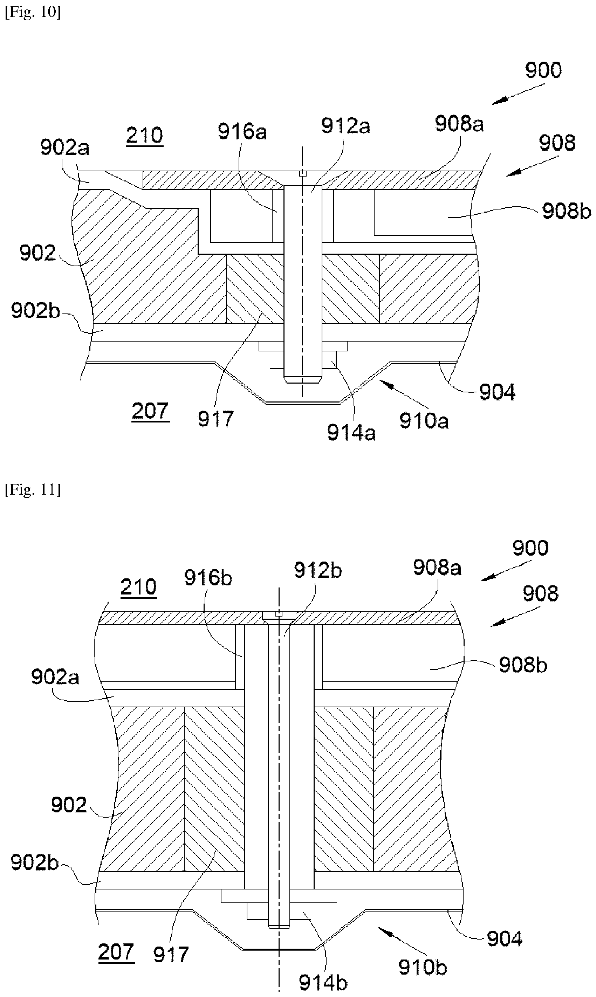

Les Figs. 10 et 11 montrent une structure fixe interne 900 de l'état de la technique. Classiquement, la structure fixe interne 900 comporte une structure en nid d'abeilles 902 présentant deux faces entre lesquelles s'étendent des alvéoles. La première face est recouverte par une peau résistive 902a qui est ajourée pour laisser passer les ondes sonores à atténuer vers les alvéoles. La première face est orientée vers la veine secondaire 210. La deuxième face est recouverte d'une peau de fond 902b qui obture les alvéoles. La deuxième face est orientée vers le noyau 207.

La structure fixe interne 900 comporte également un isolant thermique 904 qui est fixé du côté du noyau 207 à la structure en nid d'abeilles 902 à l'aide de premiers moyens de fixation non représentés.

La structure fixe interne 900 comporte également un échangeur thermo-acoustique 908 qui présente une plaque 908a qui s'étend sur toute la surface de l'échangeur thermo-acoustique 908 et des canaux 908b qui s'étendent sous une partie centrale de la plaque 908a.

Les canaux 908b constituent la partie active de l'échangeur thermo-acoustique 908 dans laquelle circule un fluide caloporteur.

La plaque 908a permet entre autres la fixation de l'échangeur thermo-acoustique 908 à la structure en nid d'abeilles 902 du côté de la veine secondaire 210 grâce à des deuxièmes moyens de fixation 910a-b.

Du fait des dilatations thermiques subies par les éléments constituant la structure fixe interne 900, il y un deuxième moyen de fixation 910a d'un premier type qui assure une fixation sans jeu et des deuxièmes moyens de fixation 910b d'un deuxième type qui assurent une fixation avec jeu.

Chaque deuxième moyen de fixation 910a-b comprend une vis 912a-b dont la tête est en appui contre la plaque 908a et dont la tige filetée traverse la structure en nid d'abeilles 902 à travers un trou prévu à cet effet dans une résine 917. Chaque deuxième moyen de fixation 910a-b comprend également un écrou 914a-b qui se visse sur la tige filetée et prend l'échangeur thermo-acoustique 908 et la structure en nid d'abeilles 902 en sandwich. Chaque deuxième moyen de fixation 910a-b comprend également une colonnette 916a-b qui se positionne autour de la tige filetée entre la plaque 908a et la peau résistive 902a.

Pour le deuxième moyen de fixation 910a du premier type, le diamètre intérieur de la colonnette 916a et le diamètre du trou traversant la structure en nid d'abeilles 902 sont ajustés au diamètre de la tige filetée.

Pour le deuxième moyen de fixation 910a du deuxième type, le diamètre intérieur de la colonnette 916b et le diamètre du trou traversant la structure en nid d'abeilles 902 sont supérieurs au diamètre de la tige filetée pour permettre une libre dilatation thermique.

Bien qu'un tel arrangement donne satisfaction, la mise en place des écrous 914a-b et leurs alignements avec les tiges filetée des vis 912a-b peuvent être compliqués.

### EXPOSÉ DE L'INVENTION

Un objet de la présente invention est ainsi de proposer une structure fixe interne pour aéronef, ladite structure fixe interne comportant une structure en nid d'abeilles, un échangeur thermo-acoustique, un cadre et des moyens de fixation qui fixent l'échangeur thermo-acoustique à la structure en nid d'abeilles.

À cet effet, est proposée une structure fixe interne pour une nacelle d'un ensemble propulsif d'un aéronef, ladite structure fixe interne comportant :
- un échangeur thermo-acoustique comportant une plaque et des canaux où le pourtour de la plaque autour des canaux est percé d'une pluralité de trous,
- une structure en nid d'abeilles présentant deux faces entre lesquelles s'étendent des alvéoles, où la première face présente un logement et est recouverte par une peau résistive ajourée et où la deuxième face est recouverte d'une peau de fond obturant les alvéoles, où l'échangeur thermo-acoustique est disposé dans le logement en regard de la peau résistive,
- un cadre noyé dans la structure en nid d'abeilles entre la peau résistive et la peau de fond où le cadre est arrangé sous la plaque, où pour chaque trou de la plaque, le cadre présente un alésage coaxial avec ledit trou, et
- pour chaque trou de la plaque, un moyen de fixation d'un premier type qui comporte une première vis et un écrou, où l'écrou est fixé au cadre de manière concentrique audit trou, et où la tige filetée de la première vis se visse dans l'écrou en traversant successivement la plaque, la peau résistive et le cadre, et dont la tête est en appui contre la face extérieure de la plaque. Avec un tel arrangement, la mise en place des vis est simplifiée.

Avantageusement, chaque écrou est un écrou aveugle disposé dans l'alésage à travers le trou de la plaque.

Avantageusement, le trou de l'un des moyens de fixation est un trou circulaire dont le diamètre est ajusté au diamètre de la tige filetée de la première vis, et le trou des autres moyens de fixation est un trou oblong dont le grand axe est parallèle à une direction longitudinale X.

Avantageusement, la structure fixe interne comporte, entre les canaux, au moins un moyen de fixation d'un deuxième type qui comporte un insert logé et fixé dans la structure en nid d'abeilles, et qui est traversé par un alésage qui débouche d'un côté à travers la peau résistive et d'un autre côté à travers la peau de fond, une deuxième vis dont la tige filetée traverse successivement la plaque, la peau résistive, l'alésage de l'insert et la peau de fond et dont la tête est en appui contre une face extérieure de la plaque, un écrou qui est vissé sur la tige filetée de la deuxième vis, et une colonnette qui se positionne autour de la tige filetée de la deuxième vis entre la plaque et la peau résistive, et où le diamètre intérieur de la colonnette est ajusté au diamètre de la tige filetée de la deuxième vis et la colonnette présente un patin supérieur en appui contre la plaque et un patin inférieur en appui contre la peau résistive, où le trou à travers lequel la deuxième vis traverse la plaque est un trou oblong dont le grand axe est parallèle à une direction longitudinale X.

Avantageusement, les faces des patins qui sont en contact avec la plaque et la peau résistive sont recouvertes d'un revêtement glissant.

L'invention propose également un ensemble propulsif d'un aéronef, ledit ensemble propulsif comportant un turboréacteur avec un noyau, une nacelle disposée autour du turboréacteur et où la nacelle comporte une structure fixe externe et une structure fixe interne selon l'une des variantes précédentes autour du noyau, où les deux structures fixes délimitent entre elles une veine secondaire, où la peau de fond est orientée vers le noyau et où la peau résistive et l'échangeur thermo-acoustique sont orientés vers la veine secondaire.

L'invention propose également un aéronef comportant un ensemble propulsif selon la variante précédente.

L'invention propose également un procédé de fabrication d'une structure fixe interne selon l'invention, où la structure en nid d'abeilles est constituée d'une structure externe qui est autour du cadre et d'une structure interne qui est à l'intérieur du cadre, ledit procédé de fabrication comportant :
- une première étape de fourniture au cours de laquelle une structure externe est fournie,
- une deuxième étape de fourniture au cours de laquelle une structure interne est fournie,
- une troisième étape de fourniture au cours de laquelle un cadre est fourni,
- une quatrième étape de fourniture au cours de laquelle une peau résistive est fournie,
- une cinquième étape de fourniture au cours de laquelle une peau de fond est fournie,
- une étape d'assemblage au cours de laquelle la peau résistive, la peau de fond, le cadre, la structure interne et la structure externe sont assemblés et fixés, et
- une étape de mise en place au cours de laquelle l'échangeur thermo-acoustique est mis en place dans le logement et fixé par les moyens de fixation.

Avantageusement, le procédé de fabrication comporte avant l'étape d'assemblage, une étape de pré-assemblage au cours de laquelle la peau résistive et le cadre sont fixés l'un à l'autre. L'invention propose également un procédé de fabrication d'une structure fixe interne selon l'invention, où la structure en nid d'abeilles est constituée d'une structure externe qui est autour du cadre et d'une structure interne qui est à l'intérieur du cadre, ledit procédé de fabrication comportant :
- une première étape de fourniture au cours de laquelle une structure externe est fournie,
- une deuxième étape de fourniture au cours de laquelle une structure interne est fournie,
- une troisième étape de fourniture au cours de laquelle un cadre est fourni,
- une quatrième étape de fourniture au cours de laquelle une peau résistive est fournie,
- une cinquième étape de fourniture au cours de laquelle une peau de fond est fournie,
- une étape de pré-assemblage au cours de laquelle la peau de fond et le cadre sont fixés l'un à l'autre,
- une étape d'assemblage au cours de laquelle la peau de fond et le cadre ainsi préassemblés, la peau résistive, la structure interne et la structure externe sont assemblés et fixés, et
- une étape de mise en place au cours de laquelle l'échangeur thermo-acoustique est mis en place dans le logement et fixé par les moyens de fixation.

L'invention propose également un procédé de fabrication d'une structure fixe interne selon l'invention, où la structure en nid d'abeilles est constituée d'une structure externe qui est autour du cadre et d'une structure interne qui est à l'intérieur du cadre, ledit procédé de fabrication comportant :
- une première étape de fourniture au cours de laquelle une structure externe est fournie,
- une deuxième étape de fourniture au cours de laquelle une structure interne est fournie,
- une troisième étape de fourniture au cours de laquelle un cadre est fourni,
- une quatrième étape de fourniture au cours de laquelle une peau résistive est fournie,
- une cinquième étape de fourniture au cours de laquelle une peau de fond est fournie,
- une étape de pré-assemblage au cours de laquelle la peau résistive, le cadre, la structure interne et la structure externe sont assemblés et fixés,
- une étape d'assemblage au cours de laquelle la peau résistive, le cadre, la structure interne et la structure externe ainsi assemblés et fixés sont assemblés et fixés à la peau de fond, et
- une étape de mise en place au cours de laquelle l'échangeur thermo-acoustique est mis en place dans le logement et fixé par les moyens de fixation.

L'invention propose également un procédé de fabrication d'une structure fixe interne selon l'invention, où la structure en nid d'abeilles est constituée d'une structure externe qui est autour du cadre et d'une structure interne qui est à l'intérieur du cadre, ledit procédé de fabrication comportant :
- une première étape de fourniture au cours de laquelle une structure externe est fournie,
- une deuxième étape de fourniture au cours de laquelle une structure interne est fournie,
- une troisième étape de fourniture au cours de laquelle un cadre est fourni,
- une quatrième étape de fourniture au cours de laquelle une peau résistive est fournie,
- une cinquième étape de fourniture au cours de laquelle une peau de fond est fournie,
- une étape de pré-assemblage au cours de laquelle la peau résistive et le cadre sont assemblés et fixés l'un à l'autre,
- une étape d'assemblage au cours de laquelle la peau résistive et le cadre ainsi assemblés sont assemblés et fixés à la structure interne et à la structure externe,
- une étape de post-assemblage au cours de laquelle la peau résistive, le cadre, la structure interne et la structure externe ainsi assemblés sont assemblés et fixés à la peau de fond, et
- une étape de mise en place au cours de laquelle l'échangeur thermo-acoustique est mis en place dans le logement et fixé par les moyens de fixation.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef selon l'invention,
[Fig. 2] est une représentation schématique en coupe et vue de côté d'un ensemble propulsif,
[Fig. 3] est une vue de dessus d'une structure fixe interne selon l'invention,
[Fig. 4] est une vue en coupe selon la ligne IV-IV de la Fig. 3 d'un système de fixation d'un premier type,
[Fig. 5] est une vue en perspective de la structure fixe interne selon l'invention,
[Fig. 6] est une vue en coupe selon le plan VI de la Fig. 5 de la structure fixe interne,
[Fig. 7] est une vue en perspective éclatée de la structure fixe interne selon l'invention,
[Fig. 8] est une vue en coupe selon la ligne VIII-VIII de la Fig. 3 pour un système de fixation d'un deuxième type,
[Fig. 9] est une vue en perspective d'une colonnette mise en œuvre dans le système de fixation du deuxième type,
[Fig. 10] est une vue en coupe d'un système de fixation d'un premier type de l'état de la technique, et
[Fig. 11] est une vue en coupe d'un système de fixation d'un deuxième type de l'état de la technique.

### EXPOSÉ DÉTAILLÉ DE MODES DE RÉALISATION

La Fig. 1 montre un aéronef 100 qui comporte un ensemble propulsif 200 fixé sous une aile 104 par l'intermédiaire d'un mât 106. L'ensemble propulsif 200 prend la même forme que celui représenté à la Fig. 2 et la différence entre l'ensemble propulsif selon l'invention et l'ensemble propulsif de l'état de la technique réside dans la structure de la structure fixe interne.

L'ensemble propulsif 200 comporte un turboréacteur 202, une nacelle 204 disposée autour du turboréacteur 202. Le turboréacteur 202 comporte un noyau 207 et une soufflante 206 montée à l'avant du noyau 207. L'air extérieur pénètre dans l'ensemble propulsif 200 par une entrée d'air 208 délimitée par l'avant de la nacelle 204.

Après avoir traversé la soufflante 206, l'air se divise en un flux primaire qui traverse le noyau 207 comportant entre autres un système de combustion, et en un flux secondaire qui circule entre le noyau 207 et la nacelle 204 dans une veine secondaire 210 prévue à cet effet.

La nacelle 204 comporte une structure fixe externe 211 (ou OFS pour « Outer Fixed Structure » en terminologie Anglo-Saxonne) et une structure fixe interne 212 (ou IFS pour

« Inner Fixed Structure » en terminologie Anglo-Saxonne) qui sont concentriques et délimitent entre elles la veine secondaire 210. La structure fixe interne 212 est autour du noyau 207.

Dans la description qui suit, les termes relatifs à une position sont pris en référence à un aéronef 100 en position normale de vol, c'est-à-dire comme il est représenté sur la Fig. 1 et les positions « avant » et « arrière » sont prises par rapport à l'avant et l'arrière de l'ensemble propulsif 200 et de l'aéronef 100 par rapport à la direction d'avancement de l'aéronef 100 lorsque le turboréacteur 202 fonctionne. La flèche F représente la direction d'avancement de l'aéronef 100 en vol.

Dans la description qui suit, et par convention, on appelle X la direction longitudinale du turboréacteur 202 qui est parallèle à l'axe longitudinal dudit turboréacteur, on appelle Y la direction transversale qui est horizontale lorsque l'aéronef 100 est au sol, et Z la direction verticale qui est verticale lorsque l'aéronef 100 est au sol, ces trois directions X, Y et Z étant orthogonales entre elles.

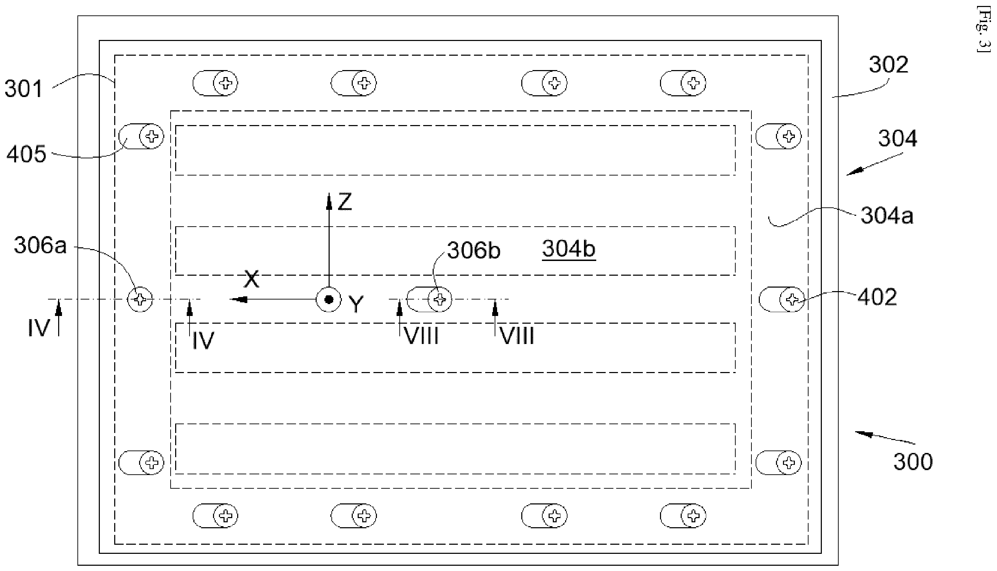

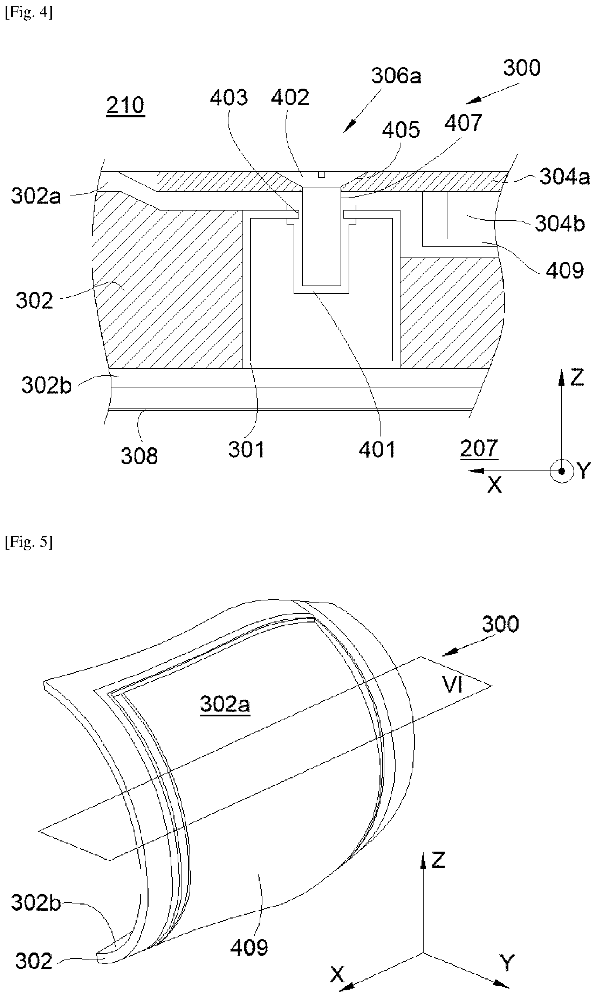

La Fig. 3 montre une structure fixe interne 300 selon l'invention qui comporte une structure en nid d'abeilles 302 et un échangeur thermo-acoustique 304 qui comporte une plaque 304a qui s'étend sur toute la surface de l'échangeur thermo-acoustique 304 et des canaux 304b qui s'étendent sous une partie centrale de la plaque 304a. Les canaux 304b constituent la partie active de l'échangeur thermo-acoustique 304 et la plaque 304a permet entre autres la fixation de l'échangeur thermo-acoustique 304 à la structure en nid d'abeilles 302 du côté de la veine secondaire 210 grâce à des moyens de fixation 306a-b. Les canaux 304b s'étendent ici parallèlement à la direction longitudinale X et un fluide caloporteur tel que de l'huile par exemple circule dans les canaux 304b. La structure en nid d'abeilles 302 comporte un logement (409, Fig. 4) dans lequel loge l'échangeur thermo-acoustique 304 et où le pourtour de la plaque 304a est en appui contre la structure en nids d'abeille 302.

Le pourtour de la plaque 304a, c'est-à-dire autour des canaux 304b, est percé d'une pluralité de trous (405, Fig. 4).

Pour chaque trou 405 de la plaque 304a, la structure fixe interne 300 comporte un moyen de fixation 306a d'un premier type. Dans le mode de réalisation de l'invention présenté ici, la structure fixe interne 300 comporte également au moins un moyen de fixation 306b d'un deuxième type disposé entre les canaux 304b.

La structure fixe interne 300 comporte également un cadre 301 qui est vu ici en traits pointillés et avec lequel les moyens de fixation 306a du premier type coopèrent pour assurer la fixation de l'échangeur thermo-acoustique 304 à la structure en nid d'abeilles 302.

La Fig. 4 montre une coupe de la structure fixe interne 300 avec le moyen de fixation 306a du premier type.

La structure en nid d'abeilles 302 présente deux faces entre lesquelles s'étendent des alvéoles. La première face présente le logement 409 et est recouverte par une peau résistive 302a qui est ajourée pour laisser passer les ondes sonores à atténuer vers les alvéoles. La première face et la peau résistive 302a sont orientées vers la veine secondaire 210. La deuxième face est recouverte d'une peau de fond 302b qui obture les alvéoles. La deuxième face et la peau de fond 302b sont orientées vers le noyau 207.

L'échangeur thermo-acoustique 304 est disposé dans le logement 409 en regard de la peau résistive 302a et est orienté vers la veine secondaire 210.

Le cadre 301 est arrangé sous la plaque 304a à l'extérieur des canaux 304b et le cadre 301 est noyé dans la structure en nid d'abeilles 302 entre la peau résistive 302a et la peau de fond 302b. Dans le mode de réalisation de l'invention présenté ici, le cadre 301 prend la forme d'un profilé creux qui est ici de section carrée.

Pour chaque trou 405 de la plaque 304a, le cadre 301 présente un alésage 403 coaxial avec ledit trou 405.

La structure fixe interne 300 comporte également ici un isolant thermique 308 qui est disposé en regard de la peau de fond 302b du côté du noyau 207 et qui est fixé à la structure en nid d'abeilles 302 par des moyens de fixation tels que ceux de l'état de la technique.

Pour chaque trou 405 de la plaque 304a, la structure fixe interne 300 comporte un moyen de fixation 306a du premier type qui comprend une première vis 402 et un écrou 401. Chaque écrou 401 est fixé au cadre 301 de manière concentrique avec ledit trou 405 et donc avec l'alésage 403 associé. Ici, l'écrou 401 est logé et fixé à l'intérieur du profilé formant le cadre 301.

La tige filetée de la première vis 402 se visse dans l'écrou 401 en traversant successivement la plaque 304a, la peau résistive 302a et le cadre 301 pour se visser dans l'écrou 401, et dont la tête est en appui contre la face extérieure de la plaque 304a c'est-à-dire la face orientée vers la veine secondaire 210.

Pour chaque première vis 402, c'est-à-dire pour chaque trou 405 de la plaque 304a, la peau résistive 302a comporte alors un alésage 407 prévu pour assurer la mise en place de la tige filetée de la première vis 402.

La fixation de l'échangeur thermo-acoustique 304 est donc relativement simple à réaliser, puisqu'il suffit de mettre en place les premières vis 402 des moyens de fixation 306a du premier type.

Pour faciliter encore plus la fixation de l'échangeur thermo-acoustique 304, chaque écrou 401 est un écrou aveugle qui est mis en place dans l'alésage 403 à travers le trou 405 de la plaque 304a et l'alésage 407 de la peau résistive 302a. La mise en place des écrous 401 et des premières vis 402 consiste alors pour chaque trou 405 de la plaque 304a à réaliser un alésage 407, 403 qui traverse la peau résistive 302a et le cadre 301, puis à disposer l'écrou aveugle 401 dans ledit alésage 403, 407 ainsi réalisé, puis à sertir ledit écrou aveugle 401 sur le cadre 301 et enfin à visser la première vis 402.

Du fait des dilatations thermiques subies par les éléments constituant la structure fixe interne 300 et plus particulièrement de la plaque 304a, il y a un moyen de fixation 306a du premier type qui assure une fixation sans jeu assurant ainsi un point de référence au montage et une pluralité de moyens de fixation 306a du premier type qui assurent une fixation avec jeu parallèlement à la direction longitudinale. Dans le mode de réalisation de l'invention présenté ici, le moyen de fixation 306a du premier type sans jeu est au milieu et à l'avant de l'échangeur thermo-acoustique 304 et les autres moyens de fixation 306a du premier type avec jeu sont répartis autour de la plaque 304a.

Pour les moyens de fixation 306a du premier type avec jeu, le trou 405 de la plaque 304a prend la forme d'un trou oblong dont le grand axe est parallèle à la direction longitudinale X et pour le moyen de fixation 306a du premier type sans jeu, le trou 405 de la plaque 304a prend la forme d'un trou circulaire dont le diamètre est ajusté au diamètre de la tige filetée de la première vis 402, c'est-à-dire que la tige filetée peut y pénétrer sans jeu.

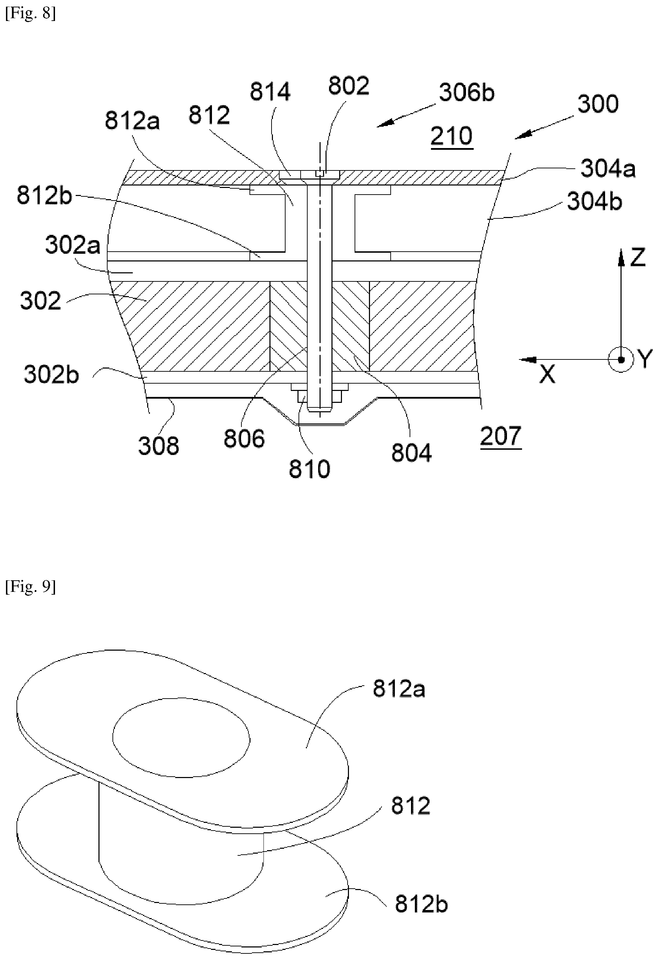

La Fig. 8 montre un mode de réalisation particulier du moyen de fixation 306b du deuxième type qui permet également une dilatation thermique de l'échangeur thermo-acoustique 304 en cas de besoin.

Le moyen de fixation 306b du deuxième type comprend un insert 804, en particulier en résine, qui est logé et fixé dans la structure en nid d'abeilles 302, en particulier ici entre la peau résistive 302a et la peau de fond 302b. L'insert 804 présente un alésage 806 traversant qui débouche d'un côté à travers la peau résistive 302a et d'un autre côté à travers la peau de fond 302b.

Le moyen de fixation 306b du deuxième type comporte une deuxième vis 802 dont la tige filetée traverse l'alésage 806 de l'insert 804 et débouche au-delà de la peau de fond 302b. La tige filetée traverse ainsi successivement la plaque 304a, la peau résistive 302a, l'alésage 8060 de l'insert 804 et la peau de fond 302b, et la tête est en appui contre la face extérieure de la plaque 304a c'est-à-dire la face orientée vers la veine secondaire 210. À cette fin, la plaque 304a, la peau résistive 302a et la peau de fond 302b présentent chacune un trou pour le passage de la tige filetée. En particulier, la plaque présente un trou 814.

Le moyen de fixation 306b du deuxième type comporte un écrou 810 qui se visse à la tige filetée de la deuxième vis 802 en venant en appui contre la peau de fond 302b pour prendre l'échangeur thermo-acoustique 304 et la structure en nid d'abeilles 302 en sandwich.

Le moyen de fixation 306b du deuxième type comporte également une colonnette 812 qui se positionne autour de la tige filetée entre la plaque 304a et la peau résistive 302a. Le diamètre intérieur de la colonnette 812 est ajusté au diamètre de la tige filetée de la deuxième vis 802. Dans ce mode de réalisation, le trou 814 à travers lequel la deuxième vis 802 traverse la plaque 304a prend la forme d'un trou oblong dont le grand axe est parallèle à la direction longitudinale X.

La Fig. 9 montre la colonnette 812 qui comporte également deux patins 812a-b qui sont perpendiculaires à l'axe de la colonnette 812 et donc à la deuxième vis 802.

Il y a un patin supérieur 812a qui vient en appui contre la plaque 304a et plus particulièrement contre une face intérieure de la plaque 304a c'est-à-dire la face orientée vers le noyau 207.

Il y a un patin inférieur 812b qui vient en appui contre la peau résistive 302a et plus particulièrement contre une face extérieure de la peau résistive 302a, c'est-à-dire la face orientée vers la veine secondaire 210.

Ainsi, en cas de dilatation thermique de la plaque 304a, celle-ci va se déplacer en glissant sur le patin supérieur 812a sans être contrainte par la deuxième vis 802 du fait de la présence du trou 814 oblong.

Pour limiter les contraintes et l'usure des pièces lorsqu'il y a des déplacements, les faces des patins 812a-b qui sont en contact avec la plaque 304a et la peau résistive 302a sont recouvertes d'un revêtement glissant tel qu'un tissu de téflon.

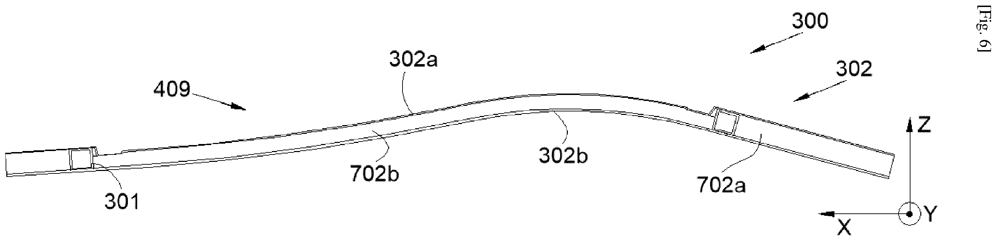

La Fig. 5 montre la structure fixe interne 300 et la Fig. 6 montre la structure fixe interne 300 en coupe sans l'échangeur thermo-acoustique 304 qui vient se loger dans le logement 409. La

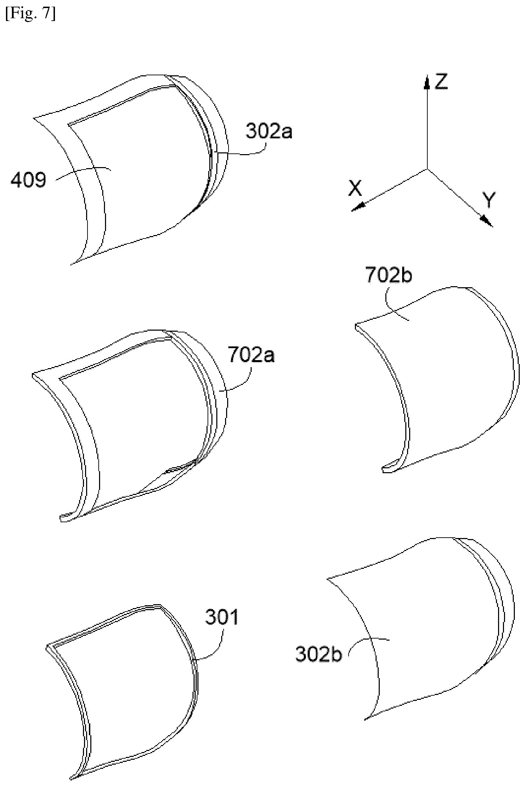

Fig. 7 montre une vue éclatée de la structure fixe interne 300 sans l'échangeur thermo-acoustique 304.

On retrouve la structure en nid d'abeilles 302 constituée d'une structure externe 702a qui est autour du cadre 301 et d'une structure interne 702b qui est à l'intérieur du cadre 301. On retrouve également la peau résistive 302a avec l'empreinte formant le logement 409, la peau de fond 302b et le cadre 301 noyé dans la structure en nid d'abeilles 302.

Si nécessaire, de la mousse peut être utilisée pour remplir les vides présents entre la structure en nid d'abeilles 302 et la peau résistive 302a ou la peau de fond 302b.

Le cadre 301 est réalisé par exemple par l'assemblage par soudage à ultrasons de quatre profilés extrudés.

Un premier procédé de fabrication de la structure fixe interne 300 comporte :
- une première étape de fourniture au cours de laquelle une structure externe 702a de forme appropriée à la structure fixe interne 300 à réaliser est fournie,
- une deuxième étape de fourniture au cours de laquelle une structure interne 702b de forme appropriée à la structure fixe interne 300 à réaliser est fournie,
- une troisième étape de fourniture au cours de laquelle un cadre 301 de forme appropriée à la structure fixe interne 300 à réaliser est fourni,
- une quatrième étape de fourniture au cours de laquelle une peau résistive 302a de forme appropriée à la structure fixe interne 300 à réaliser et comportant entre autres le logement 409 est fournie,
- une cinquième étape de fourniture au cours de laquelle une peau de fond 302b de forme appropriée à la structure fixe interne 300 à réaliser est fournie,
- une étape d'assemblage au cours de laquelle la peau résistive 302a, la peau de fond 302b, le cadre 301, la structure interne 702b et la structure externe 702a sont assemblés et fixés, par exemple par collage, et
- une étape de mise en place au cours de laquelle l'échangeur thermo-acoustique 304 est mis en place dans le logement 409 et fixé par les moyens de fixation 306a-b.

Selon un mode de réalisation particulier, le procédé peut comporter avant l'étape d'assemblage, une étape de pré-assemblage au cours de laquelle la peau résistive 302a et le cadre 301 sont fixés l'un à l'autre par exemple par soudage.

Un deuxième procédé de fabrication de la structure fixe interne 300 comporte :
- une première étape de fourniture au cours de laquelle une structure externe 702a de forme appropriée à la structure fixe interne 300 à réaliser est fournie,
- une deuxième étape de fourniture au cours de laquelle une structure interne 702b de forme appropriée à la structure fixe interne 300 à réaliser est fournie,
- une troisième étape de fourniture au cours de laquelle un cadre 301 de forme appropriée à la structure fixe interne 300 à réaliser est fourni,
- une quatrième étape de fourniture au cours de laquelle une peau résistive 302a de forme appropriée à la structure fixe interne 300 à réaliser et comportant entre autres le logement 409 est fournie,
- une cinquième étape de fourniture au cours de laquelle une peau de fond 302b de forme appropriée à la structure fixe interne 300 à réaliser est fournie,
- une étape de pré-assemblage au cours de laquelle la peau de fond 302b et le cadre 301 sont fixés l'un à l'autre par exemple par mise en place de boulons qui les serrent l'un contre l'autre,
- une étape d'assemblage au cours de laquelle la peau de fond 302b et le cadre 301 ainsi préassemblés, la peau résistive 302a, la structure interne 702b et la structure externe 702a sont assemblés et fixés, par exemple par collage, et
- une étape de mise en place au cours de laquelle l'échangeur thermo-acoustique 304 est mis en place dans le logement 409 et fixé par les moyens de fixation 306a-b.

Les premier et deuxième procédés de fabrication sont plus particulièrement mis en œuvre lorsque la peau résistive 302a et la peau de fond 302b sont constituées d'une plaque métallique telle que de l'aluminium. La peau résistive 302a et la peau de fond 302b sont alors mises en forme par formage.

Pour les premier et deuxième procédés de fabrication, l'étape d'assemblage consiste par exemple à positionner les différents éléments dans un moule en incorporant de la colle et en faisant subir un cycle de cuisson, par exemple à 3 bars, pour sécher la colle puis à démouler l'ensemble ainsi constitué.

Pour les premier et deuxième procédés de fabrication, entre l'étape d'assemblage et l'étape de mise en place, une étape d'usinage de l'assemblage peut être mise en œuvre. Cet usinage permet entre autres de finaliser les contours de l'assemblage par détourage par exemple.

Un troisième procédé de fabrication de la structure fixe interne 300 comporte :
- une première étape de fourniture au cours de laquelle une structure externe 702a de forme appropriée à la structure fixe interne 300 à réaliser est fournie,
- une deuxième étape de fourniture au cours de laquelle une structure interne 702b de forme appropriée à la structure fixe interne 300 à réaliser est fournie,
- une troisième étape de fourniture au cours de laquelle un cadre 301 de forme appropriée à la structure fixe interne 300 à réaliser est fourni,
- une quatrième étape de fourniture au cours de laquelle une peau résistive 302a de forme appropriée à la structure fixe interne 300 à réaliser et comportant entre autres le logement 409 est fournie,
- une cinquième étape de fourniture au cours de laquelle une peau de fond 302b de forme appropriée à la structure fixe interne 300 à réaliser est fournie,
- une étape de pré-assemblage au cours de laquelle la peau résistive 302a, le cadre 301, la structure interne 702b et la structure externe 702a sont assemblés et fixés, par exemple par collage,
- une étape d'assemblage au cours de laquelle la peau résistive 302a, le cadre 301, la structure interne 702b et la structure externe 702a ainsi assemblés et fixés sont assemblés et fixés à la peau de fond 302b, par exemple par collage, et
- une étape de mise en place au cours de laquelle l'échangeur thermo-acoustique 304 est mis en place dans le logement 409 et fixé par les moyens de fixation 306a-b.

Le troisième procédé de fabrication est plus particulièrement mis en œuvre lorsque la peau résistive 302a et la peau de fond 302b sont constituées de matériaux composites, en particulier à base de matériaux thermoplastiques. La peau résistive 302a est ainsi mise en forme par dépose de plis successifs et par cuisson sous pression dans un autoclave, par exemple à 7 bars. Pour le troisième procédé de fabrication, l'étape de pré-assemblage consiste par exemple à positionner les différents éléments dans un moule en incorporant de la colle et en faisant subir un cycle de cuisson sous pression, par exemple à 2 bars, pour sécher la colle.

Pour le troisième procédé de fabrication, la peau de fond 302b est mise en forme par dépose de plis successifs et l'étape d'assemblage consiste par exemple à positionner les différents éléments dans un moule en incorporant de la colle et en faisant subir un cycle de cuisson sous pression, pour sécher la colle et solidifier la peau de fond 302b, puis à démouler l'ensemble ainsi constitué.

Un quatrième procédé de fabrication de la structure fixe interne 300 comporte :
- une première étape de fourniture au cours de laquelle une structure externe 702a de forme appropriée à la structure fixe interne 300 à réaliser est fournie,
- une deuxième étape de fourniture au cours de laquelle une structure interne 702b de forme appropriée à la structure fixe interne 300 à réaliser est fournie,
- une troisième étape de fourniture au cours de laquelle un cadre 301 de forme appropriée à la structure fixe interne 300 à réaliser est fourni,
- une quatrième étape de fourniture au cours de laquelle une peau résistive 302a de forme appropriée à la structure fixe interne 300 à réaliser et comportant entre autres le logement 409 est fournie,
- une cinquième étape de fourniture au cours de laquelle une peau de fond 302b de forme appropriée à la structure fixe interne 300 à réaliser est fournie,
- une étape de pré-assemblage au cours de laquelle la peau résistive 302a et le cadre 301 sont assemblés et fixés l'un à l'autre par exemple par soudage à ultrasons,
- une étape d'assemblage au cours de laquelle la peau résistive 302a et le cadre 301 ainsi assemblés sont assemblés et fixés, par exemple par collage, à la structure interne 702b et à la structure externe 702a,
- une étape de post-assemblage au cours de laquelle la peau résistive 302a, le cadre 301, la structure interne 702b et la structure externe 702a ainsi assemblés sont assemblés et fixés à la peau de fond 302b, par exemple par collage, et
- une étape de mise en place au cours de laquelle l'échangeur thermo-acoustique 304 est mis en place dans le logement 409 et fixé par les moyens de fixation 306a-b.

Le quatrième procédé de fabrication est plus particulièrement mis en œuvre lorsque la peau résistive 302a et la peau de fond 302b sont constituées de matériaux composites, en particulier à base de matériaux thermoplastiques. La peau résistive 302a est ainsi mise en forme par dépose de plis successifs et par cuisson sous pression dans un autoclave, par exemple à 7 bars. Pour le quatrième procédé de fabrication, l'étape d'assemblage consiste par exemple à positionner les différents éléments dans un moule en incorporant de la colle et en faisant subir un cycle de cuisson sous pression, par exemple à 2 bars, pour sécher la colle.

Pour le quatrième procédé de fabrication, la peau de fond 302b est mise en forme par dépose de plis successifs et l'étape de post-assemblage consiste par exemple à positionner les différents éléments dans un moule en incorporant de la colle et en faisant subir un cycle de cuisson sous pression, pour sécher la colle et solidifier la peau de fond 302b, puis à démouler l'ensemble ainsi constitué.

Pour les troisième et quatrième procédés de fabrication, entre l'étape d'assemblage et l'étape de mise en place, une étape d'usinage de l'assemblage peut être mise en œuvre. Cet usinage permet entre autres de finaliser les contours de l'assemblage par détourage par exemple.

Un cinquième procédé de fabrication de la structure fixe interne 300 comporte :
- une première étape de fourniture au cours de laquelle une structure externe 702a de forme appropriée à la structure fixe interne 300 à réaliser est fournie,
- une deuxième étape de fourniture au cours de laquelle une structure interne 702b de forme appropriée à la structure fixe interne 300 à réaliser est fournie,
- une troisième étape de fourniture au cours de laquelle un cadre 301 de forme appropriée à la structure fixe interne 300 à réaliser est fourni,
- une quatrième étape de fourniture au cours de laquelle une peau résistive 302a de forme appropriée à la structure fixe interne 300 à réaliser et comportant entre autres le logement 409 est fournie,
- une cinquième étape de fourniture au cours de laquelle une peau de fond 302b de forme appropriée à la structure fixe interne 300 à réaliser est fournie,
- une étape de pré-assemblage au cours de laquelle la peau résistive 302a, le cadre 301, la structure interne 702b et la structure externe 702a sont assemblés et fixés, par exemple par collage,
- une étape d'assemblage au cours de laquelle la peau résistive 302a, le cadre 301, la structure interne 702b et la structure externe 702a ainsi assemblés et fixés sont assemblés et fixés à la peau de fond 302b, par exemple par collage, et
- une étape de mise en place au cours de laquelle l'échangeur thermo-acoustique 304 est mis en place dans le logement 409 et fixé par les moyens de fixation 306a-b.

Le cinquième procédé de fabrication est plus particulièrement mis en œuvre lorsque la peau résistive 302a et la peau de fond 302b sont constituées de matériaux composites, en particulier à base de matériaux thermodurcissables. La peau résistive 302a est ainsi mise en forme par dépose de plis successifs et par cuisson sous pression dans un autoclave, par exemple à 7 bars. Pour le cinquième procédé de fabrication, l'étape de pré-assemblage consiste par exemple à positionner les différents éléments dans un moule en incorporant de la colle et en faisant subir un cycle de cuisson sous pression, par exemple à 2 bars, pour sécher la colle.

Pour le cinquième procédé de fabrication, la peau de fond 302b est mise en forme par dépose de plis successifs et l'étape d'assemblage consiste par exemple à positionner les différents éléments dans un moule en incorporant de la colle et en faisant subir un cycle de cuisson sous pression, pour sécher la colle et solidifier la peau de fond 302b, puis à démouler l'ensemble ainsi constitué.

Pour le cinquième procédé de fabrication, entre l'étape d'assemblage et l'étape de mise en place, une étape d'usinage de l'assemblage peut être mise en œuvre. Cet usinage permet entre autres de finaliser les contours de l'assemblage par détourage par exemple.

Pour les différents procédés de fabrication décrits ci-dessus et dans le cas d'utilisation d'écrous aveugles, la fixation par les moyens de fixation 306a du premier type consiste à percer la plaque 304a, la peau résistive 302a et le cadre 301 pour disposer l'écrou aveugle 401, le sertir et visser la première vis 402. Pour les moyens de fixation 306b du deuxième type tels que représentés en Fig. 8, la fixation par les moyens de fixation 306b du deuxième type consiste à percer la plaque 304a, l'insert 804, positionner la colonnette 812, insérer la deuxième vis 802 et la serrer sur l'écrou 810.

## Revendications

1. Structure fixe interne (300) pour une nacelle (204) d'un ensemble propulsif (200) d'un aéronef (100), ladite structure fixe interne (300) comportant :
- un échangeur thermo-acoustique (304) comportant une plaque (304a) et des canaux (304b) où le pourtour de la plaque (304a) autour des canaux (304b) est percé d'une pluralité de trous (405),
- une structure en nid d'abeilles (302) présentant deux faces entre lesquelles s'étendent des alvéoles, où la première face présente un logement (409) et est recouverte par une peau résistive (302a) ajourée et où la deuxième face est recouverte d'une peau de fond (302b) obturant les alvéoles, où l'échangeur thermo-acoustique (304) est disposé dans le logement (409) en regard de la peau résistive (302a),
- un cadre (301) noyé dans la structure en nid d'abeilles (302) entre la peau résistive (302a) et la peau de fond (302b) où le cadre (301) est arrangé sous la plaque (304a), où pour chaque trou (405) de la plaque (304a), le cadre (301) présente un alésage (403) coaxial avec ledit trou (405), et
- pour chaque trou (405) de la plaque (304a), un moyen de fixation (306a) d'un premier type qui comporte une première vis (402) et un écrou (401), où l'écrou (401) est fixé au cadre (301) de manière concentrique audit trou (405), et où la tige filetée de la première vis (402) se visse dans l'écrou (401) en traversant successivement la plaque (304a), la peau résistive (302a) et le cadre (301), et dont la tête est en appui contre la face extérieure de la plaque (304a).

2. Structure fixe interne (300) selon la revendication 1, où chaque écrou (401) est un écrou aveugle disposé dans l'alésage (403) à travers le trou (405) de la plaque (304a).

3. Structure fixe interne (300) selon l'une des revendications 1 ou 2, où le trou (405) de l'un des moyens de fixation (306a) est un trou circulaire dont le diamètre est ajusté au diamètre de la tige filetée de la première vis (402), et en ce que le trou (405) des autres moyens de fixation (306a) est un trou oblong dont le grand axe est parallèle à une direction longitudinale X.

4. Structure fixe interne (300) selon l'une des revendications 1 à 3, où elle comporte, entre les canaux (304b), au moins un moyen de fixation (306b) d'un deuxième type qui comporte un insert (804) logé et fixé dans la structure en nid d'abeilles (302), et qui est traversé par un alésage (806) qui débouche d'un côté à travers la peau résistive (302a) et d'un autre côté à travers la peau de fond (302b), une deuxième vis (802) dont la tige filetée traverse successivement la plaque (304a), la peau résistive (302a), l'alésage (806) de l'insert (804) et la peau de fond (302b) et dont la tête est en appui contre une face extérieure de la plaque (304a), un écrou (810) qui est vissé sur la tige filetée de la deuxième vis (802), et une colonnette (812) qui se positionne autour de la tige filetée de la deuxième vis (802) entre la plaque (304a) et la peau résistive (302a), et où le diamètre intérieur de la colonnette (812) est ajusté au diamètre de la tige filetée de la deuxième vis (802) et en ce que la colonnette (812) présente un patin supérieur (812a) en appui contre la plaque (304a) et un patin inférieur (812b) en appui contre la peau résistive (302a), où le trou (814) à travers lequel la deuxième vis (802) traverse la plaque (304a) est un trou oblong dont le grand axe est parallèle à une direction longitudinale X.

5. Structure fixe interne (300) selon la revendication 4, où les faces des patins (812a-b) qui sont en contact avec la plaque (304a) et la peau résistive (302a) sont recouvertes d'un revêtement glissant.

6. Ensemble propulsif (200) d'un aéronef (100), ledit ensemble propulsif (200) comportant un turboréacteur (202) avec un noyau (207), une nacelle (204) disposée autour du turboréacteur (202) et où la nacelle (204) comporte une structure fixe externe (211) et une structure fixe interne (212, 300) selon l'une des revendications précédentes autour du noyau (207), où les deux structures fixes délimitent entre elles une veine secondaire (210), où la peau de fond (302b) est orientée vers le noyau (207) et où la peau résistive (302a) et l'échangeur thermo-acoustique (304) sont orientés vers la veine secondaire (210).

7. Aéronef (10) comportant un ensemble propulsif (200) selon la revendication précédente.

8. Procédé de fabrication d'une structure fixe interne (300) selon la revendication 1, où la structure en nid d'abeilles (302) est constituée d'une structure externe (702a) qui est autour du cadre (301) et d'une structure interne (702b) qui est à l'intérieur du cadre (301), ledit procédé de fabrication comportant :
- une première étape de fourniture au cours de laquelle une structure externe (702a) est fournie,
- une deuxième étape de fourniture au cours de laquelle une structure interne (702b) est fournie,
- une troisième étape de fourniture au cours de laquelle un cadre (301) est fourni,
- une quatrième étape de fourniture au cours de laquelle une peau résistive (302a) est fournie,
- une cinquième étape de fourniture au cours de laquelle une peau de fond (302b) est fournie,
- une étape d'assemblage au cours de laquelle la peau résistive (302a), la peau de fond (302b), le cadre (301), la structure interne (702b) et la structure externe (702a) sont assemblés et fixés, par exemple par collage, et
- une étape de mise en place au cours de laquelle l'échangeur thermo-acoustique (304) est mis en place dans le logement (409) et fixé par les moyens de fixation (306a-b).

9. Procédé de fabrication selon la revendication 8, où il comporte avant l'étape d'assemblage, une étape de pré-assemblage au cours de laquelle la peau résistive (302a) et le cadre (301) sont fixés l'un à l'autre.

10. Procédé de fabrication d'une structure fixe interne (300) selon la revendication 1, où la structure en nid d'abeilles (302) est constituée d'une structure externe (702a) qui est autour du cadre (301) et d'une structure interne (702b) qui est à l'intérieur du cadre (301), ledit procédé de fabrication comportant :
- une première étape de fourniture au cours de laquelle une structure externe (702a) est fournie,
- une deuxième étape de fourniture au cours de laquelle une structure interne (702b) est fournie,
- une troisième étape de fourniture au cours de laquelle un cadre (301) est fourni,
- une quatrième étape de fourniture au cours de laquelle une peau résistive (302a) est fournie,
- une cinquième étape de fourniture au cours de laquelle une peau de fond (302b) est fournie,
- une étape de pré-assemblage au cours de laquelle la peau de fond (302b) et le cadre (301) sont fixés l'un à l'autre,
- une étape d'assemblage au cours de laquelle la peau de fond (302b) et le cadre (301) ainsi préassemblés, la peau résistive (302a), la structure interne (702b) et la structure externe (702a) sont assemblés et fixés, par exemple par collage, et
- une étape de mise en place au cours de laquelle l'échangeur thermo-acoustique (304) est mis en place dans le logement (409) et fixé par les moyens de fixation (306a-b).

11. Procédé de fabrication d'une structure fixe interne (300) selon la revendication 1, où la structure en nid d'abeilles (302) est constituée d'une structure externe (702a) qui est autour du cadre (301) et d'une structure interne (702b) qui est à l'intérieur du cadre (301), ledit procédé de fabrication comportant :
- une première étape de fourniture au cours de laquelle une structure externe (702a) est fournie,
- une deuxième étape de fourniture au cours de laquelle une structure interne (702b) est fournie,
- une troisième étape de fourniture au cours de laquelle un cadre (301) est fourni,
- une quatrième étape de fourniture au cours de laquelle une peau résistive (302a) est fournie,
- une cinquième étape de fourniture au cours de laquelle une peau de fond (302b) est fournie,
- une étape de pré-assemblage au cours de laquelle la peau résistive (302a), le cadre (301), la structure interne (702b) et la structure externe (702a) sont assemblés et fixés,
- une étape d'assemblage au cours de laquelle la peau résistive (302a), le cadre (301), la structure interne (702b) et la structure externe (702a) ainsi assemblés et fixés sont assemblés et fixés à la peau de fond (302b), et
- une étape de mise en place au cours de laquelle l'échangeur thermo-acoustique (304) est mis en place dans le logement (409) et fixé par les moyens de fixation (306a-b).

12. Procédé de fabrication d'une structure fixe interne (300) selon la revendication 1, où la structure en nid d'abeilles (302) est constituée d'une structure externe (702a) qui est autour du cadre (301) et d'une structure interne (702b) qui est à l'intérieur du cadre (301), ledit procédé de fabrication comportant :
- une première étape de fourniture au cours de laquelle une structure externe (702a) est fournie,
- une deuxième étape de fourniture au cours de laquelle une structure interne (702b) est fournie,
- une troisième étape de fourniture au cours de laquelle un cadre (301) est fourni,
- une quatrième étape de fourniture au cours de laquelle une peau résistive (302a) est fournie,
- une cinquième étape de fourniture au cours de laquelle une peau de fond (302b) est fournie,
- une étape de pré-assemblage au cours de laquelle la peau résistive (302a) et le cadre (301) sont assemblés et fixés l'un à l'autre,
- une étape d'assemblage au cours de laquelle la peau résistive (302a) et le cadre (301) ainsi assemblés sont assemblés et fixés à la structure interne (702b) et à la structure externe (702a),
- une étape de post-assemblage au cours de laquelle la peau résistive (302a), le cadre (301), la structure interne (702b) et la structure externe (702a) ainsi assemblés sont assemblés et fixés à la peau de fond (302b), et
- une étape de mise en place au cours de laquelle l'échangeur thermo-acoustique (304) est mis en place dans le logement (409) et fixé par les moyens de fixation (306a-b).

## Patentansprüche

1. Innere feste Struktur (300) für eine Gondel (204) einer Antriebseinheit (200) eines Luftfahrzeugs (100), wobei die innere feste Struktur (300) umfasst:
- einen thermoakustischen Wärmetauscher (304) mit einer Platte (304a) und Kanälen (304b),wobei der Rand der Platte (304a) um die Kanäle (304b) herum von mehreren Löchern (405) durchbohrt ist,
- eine Wabenstruktur (302), die zwei Seiten aufweist, zwischen denen sich Waben erstrecken, wobei die erste Seite eine Aufnahme (409) aufweist und von einer durchbrochenen resistiven Haut (302a) bedeckt ist und wobei die zweite Seite von einer die Waben umgebenden unteren Haut (302b) bedeckt ist, wobei der thermoakustische Wärmetauscher (304) in der Aufnahme (409) gegenüber der resistiven Haut (302a) angeordnet ist,
- einen Rahmen (301), der in die Wabenstruktur (302) zwischen der resistiven Haut (302a) und der unteren Haut (302b) eingebettet ist, wobei der Rahmen (301) unter der Platte (304a) angeordnet ist, wobei für jedes Loch (405) der Platte (304a) der Rahmen (301) eine Bohrung (403) aufweist, die mit dem Loch (405) koaxial ist, und
- für jedes Loch (405) der Platte (304a) ein Befestigungsmittel (306a) eines ersten Typs, das eine erste Schraube (402) und eine Mutter (401) umfasst, wobei die Mutter (401) am Rahmen (301) auf eine zu dem Loch (405) konzentrische Weise befestigt ist und wobei der Gewindeschaft der ersten Schraube (402) in die Mutter (401) eingeschraubt wird, indem er nacheinander die Platte (304a), die resistive Haut (302a) und den Rahmen (301) durchquert, und wobei ihr Kopf an der Außenseite der Platte (304a) anliegt.

2. Innere feste Struktur (300) nach Anspruch 1, wobei jede Mutter (401) eine Blindmutter ist, die in der Bohrung (403) durch das Loch (405) der Platte (304a) hindurch angeordnet ist.

3. Innere feste Struktur (300) nach einem der Ansprüche 1 oder 2, wobei das Loch (405) eines der Befestigungsmittel (306a) ein kreisförmiges Loch ist, dessen Durchmesser dem Durchmesser des Gewindeschaftes der ersten Schraube (402) entspricht, und wobei das Loch (405) der anderen Befestigungsmittel (306a) ein Langloch ist, dessen große Achse parallel zu einer Längsrichtung X ist.

4. Innere feste Struktur (300) nach einem der Ansprüche 1 bis 3, wobei sie zwischen den Kanälen (304b) umfasst: mindestens ein Befestigungsmittel (306b) eines zweiten Typs, das einen Einsatz (804) umfasst, der in der Wabenstruktur (302) aufgenommen und befestigt ist und der von einer Bohrung (806) durchquert wird, die auf einer Seite durch die resistive Haut (302a) hindurch und auf einer anderen Seite durch die untere Haut (302b) hindurch mündet, eine zweite Schraube (802), deren Gewindeschaft nacheinander die Platte (304a), die resistive Haut (302a), die Bohrung (806) des Einsatzes (804) und die untere Haut (302b) durchquert und deren Kopf an einer Außenseite der Platte (304a) anliegt, eine Mutter (810), die auf den Gewindeschaft der zweiten Schraube (802) aufgeschraubt ist, und eine Säule (812), die um den Gewindeschaft der zweiten Schraube (802) herum zwischen der Platte (304a) und der resistiven Haut (302a) positioniert ist, und wobei der Innendurchmesser der Säule (812) dem Durchmesser des Gewindeschaftes der zweiten Schraube (802) entspricht, und wobei die Säule (812) einen oberen Gleitschuh (812a), der an der Platte (304a) anliegt, und einen unteren Gleitschuh (812b), der an der resistiven Haut (302a) anliegt, aufweist, wobei das Loch (814), durch welches die zweite Schraube (802) die Platte (304a) durchquert, ein Langloch ist, dessen große Achse parallel zu einer Längsrichtung X ist.

5. Innere feste Struktur (300) nach Anspruch 4, wobei die Seiten der Gleitschuhe (812a-b), die sich in Kontakt mit der Platte (304a) und der resistiven Haut (302a) befinden, mit einer Gleitbeschichtung bedeckt sind.

6. Antriebseinheit (200) eines Luftfahrzeugs (100), wobei die Antriebseinheit (200) ein Turbostrahltriebwerk (202) mit einem Kern (207) und eine um das Turbostrahltriebwerk (202) herum angeordnete Gondel (204) umfasst und wobei die Gondel (204) eine äußere feste Struktur (211) und eine innere feste Struktur (212, 300) nach einem der vorhergehenden Ansprüche um den Kern (207) herum umfasst, wobei die zwei festen Strukturen zwischen sich einen Mantelstromkanal (210) begrenzen, wobei die untere Haut (302b) dem Kern (207) zugewandt ist und wobei die resistive Haut (302a) und der thermoakustische Wärmetauscher (304) dem Mantelstromkanal (210) zugewandt sind.

7. Luftfahrzeug (10), welches eine Antriebseinheit (200) nach dem vorhergehenden Anspruch umfasst.

8. Verfahren zur Herstellung einer inneren festen Struktur (300) nach Anspruch 1, wobei die Wabenstruktur (302) aus einer äußeren Struktur (702a), die sich um den Rahmen (301) herum befindet, und einer inneren Struktur (702b), die sich im Inneren des Rahmens (301) befindet, besteht, wobei das Verfahren zur Herstellung umfasst:
- einen ersten Schritt der Bereitstellung, in dem eine äußere Struktur (702a) bereitgestellt wird,
- einen zweiten Schritt der Bereitstellung, in dem eine innere Struktur (702b) bereitgestellt wird,
- einen dritten Schritt der Bereitstellung, in dem ein Rahmen (301) bereitgestellt wird,
- einen vierten Schritt der Bereitstellung, in dem eine resistive Haut (302a) bereitgestellt wird,
- einen fünften Schritt der Bereitstellung, in dem eine untere Haut (302b) bereitgestellt wird,
- einen Schritt des Zusammenbaus, in dem die resistive Haut (302a), die untere Haut (302b), der Rahmen (301), die innere Struktur (702b) und die äußere Struktur (702a) zusammengebaut und befestigt werden, zum Beispiel durch Kleben, und
- einen Schritt der Anbringung, in dem der thermoakustische Wärmetauscher (304) in der Aufnahme (409) angebracht und durch die Befestigungsmittel (306ab) befestigt wird.

9. Verfahren zur Herstellung nach Anspruch 8, wobei es vor dem Schritt des Zusammenbaus einen Schritt der Vormontage umfasst, in dem die resistive Haut (302a) und der Rahmen (301) aneinander befestigt werden.

10. Verfahren zur Herstellung einer inneren festen Struktur (300) nach Anspruch 1, wobei die Wabenstruktur (302) aus einer äußeren Struktur (702a), die sich um den Rahmen (301) herum befindet, und einer inneren Struktur (702b), die sich im Inneren des Rahmens (301) befindet, besteht, wobei das Verfahren zur Herstellung umfasst:
- einen ersten Schritt der Bereitstellung, in dem eine äußere Struktur (702a) bereitgestellt wird,
- einen zweiten Schritt der Bereitstellung, in dem eine innere Struktur (702b) bereitgestellt wird,
- einen dritten Schritt der Bereitstellung, in dem ein Rahmen (301) bereitgestellt wird,
- einen vierten Schritt der Bereitstellung, in dem eine resistive Haut (302a) bereitgestellt wird,
- einen fünften Schritt der Bereitstellung, in dem eine untere Haut (302b) bereitgestellt wird,
- einen Schritt der Vormontage, in dem die untere Haut (302b) und der Rahmen (301) aneinander befestigt werden,
- einen Schritt des Zusammenbaus, in dem die untere Haut (302b) und der Rahmen (301), die so vormontiert wurden, die resistive Haut (302a), die innere Struktur (702b) und die äußere Struktur (702a) zusammengebaut und befestigt werden, zum Beispiel durch Kleben, und
- einen Schritt der Anbringung, in dem der thermoakustische Wärmetauscher (304) in der Aufnahme (409) angebracht und durch die Befestigungsmittel (306ab) befestigt wird.

11. Verfahren zur Herstellung einer inneren festen Struktur (300) nach Anspruch 1, wobei die Wabenstruktur (302) aus einer äußeren Struktur (702a), die sich um den Rahmen (301) herum befindet, und einer inneren Struktur (702b), die sich im Inneren des Rahmens (301) befindet, besteht, wobei das Verfahren zur Herstellung umfasst:
- einen ersten Schritt der Bereitstellung, in dem eine äußere Struktur (702a) bereitgestellt wird,
- einen zweiten Schritt der Bereitstellung, in dem eine innere Struktur (702b) bereitgestellt wird,
- einen dritten Schritt der Bereitstellung, in dem ein Rahmen (301) bereitgestellt wird,
- einen vierten Schritt der Bereitstellung, in dem eine resistive Haut (302a) bereitgestellt wird,
- einen fünften Schritt der Bereitstellung, in dem eine untere Haut (302b) bereitgestellt wird,
- einen Schritt der Vormontage, in dem die resistive Haut (302a), der Rahmen (301), die innere Struktur (702b) und die äußere Struktur (702a) zusammengebaut und befestigt werden,
- einen Schritt des Zusammenbaus, in dem die resistive Haut (302a), der Rahmen (301), die innere Struktur (702b) und die äußere Struktur (702a), die so zusammengebaut und befestigt wurden, mit der unteren Haut (302b) zusammengebaut und in ihr befestigt werden, und
- einen Schritt der Anbringung, in dem der thermoakustische Wärmetauscher (304) in der Aufnahme (409) angebracht und durch die Befestigungsmittel (306ab) befestigt wird.

12. Verfahren zur Herstellung einer inneren festen Struktur (300) nach Anspruch 1, wobei die Wabenstruktur (302) aus einer äußeren Struktur (702a), die sich um den Rahmen (301) herum befindet, und einer inneren Struktur (702b), die sich im Inneren des Rahmens (301) befindet, besteht, wobei das Verfahren zur Herstellung umfasst:
- einen ersten Schritt der Bereitstellung, in dem eine äußere Struktur (702a) bereitgestellt wird,
- einen zweiten Schritt der Bereitstellung, in dem eine innere Struktur (702b) bereitgestellt wird,
- einen dritten Schritt der Bereitstellung, in dem ein Rahmen (301) bereitgestellt wird,
- einen vierten Schritt der Bereitstellung, in dem eine resistive Haut (302a) bereitgestellt wird,
- einen fünften Schritt der Bereitstellung, in dem eine untere Haut (302b) bereitgestellt wird,
- einen Schritt der Vormontage, in dem die resistive Haut (302a) und der Rahmen (301) zusammengebaut und aneinander befestigt werden,
- einen Schritt des Zusammenbaus, in dem die resistive Haut (302a) und der Rahmen (301), die so zusammengebaut wurden, mit der inneren Struktur (702b) und mit der äußeren Struktur (702a) zusammengebaut und an diesen befestigt werden,
- einen Schritt der Nachmontage, in dem die resistive Haut (302a), der Rahmen (301), die innere Struktur (702b) und die äußere Struktur (702a), die so zusammengebaut wurden, mit der unteren Haut (302b) zusammengebaut und an ihr befestigt werden, und
- einen Schritt der Anbringung, in dem der thermoakustische Wärmetauscher (304) in der Aufnahme (409) angebracht und durch die Befestigungsmittel (306ab) befestigt wird.

## Claims

1. Internal fixed structure (300) for a nacelle (204) of a propulsion assembly (200) of an aircraft (100), said internal fixed structure (300) having:
- a thermoacoustic exchanger (304) having a plate (304a) and channels (304b), wherein the perimeter of the plate (304a) around the channels (304b) is pierced with a plurality of holes (405),
- a honeycomb structure (302) having two faces between which cells extend, wherein the first face has a housing (409) and is covered by a perforated resistive skin (302a) and wherein the second face is covered by a bottom skin (302b) closing off the cells, wherein the thermoacoustic exchanger (304) is disposed in the housing (409) alongside the resistive skin (302a),
- a frame (301) embedded in the honeycomb structure (302) between the resistive skin (302a) and the bottom skin (302b), wherein the frame (301) is arranged beneath the plate (304a), wherein for each hole (405) in the plate (304a), the frame (301) has a bore (403) coaxial with said hole (405), and
- for each hole (405) in the plate (304a), a fastening means (306a) of a first type that has a first screw (402) and a nut (401), wherein the nut (401) is fastened to the frame (301) concentrically with respect to said hole (405), and wherein the threaded shank of the first screw (402) is screwed into the nut (401), passing successively through the plate (304a), the resistive skin (302a) and the frame (301), and the head of which bears against the outer face of the plate (304a).

2. Internal fixed structure (300) according to Claim **1,** wherein each nut (401) is a blind nut disposed in the bore (403) through the hole (405) in the plate (304a).

3. Internal fixed structure (300) according to either of Claims 1 and 2, wherein the hole (405) in one of the fastening means (306a) is a circular hole of which the diameter is adjusted to the diameter of the threaded shank of the first screw (402), and in that the hole (405) in the other fastening means (306a) is an oblong hole of which the major axis is parallel to a longitudinal direction X.

4. Internal fixed structure (300) according to one of Claims 1 to 3, wherein it has, between the channels (304b), at least one fastening means (306b) of a second type that has an insert (804) housed and fastened in the honeycomb structure (302), and that is passed through by a bore (806) that opens on one side through the resistive skin (302a) and on the other side through the bottom skin (302b), a second screw (802) of which the threaded shank passes successively through the plate (304a), the resistive skin (302a), the bore (806) in the insert (804) and the bottom skin (302b) and of which the head bears against an outer face of the plate (304a), a nut (810) that is screwed onto the threaded shank of the second screw (802), and a post (812) that is positioned around the threaded shank of the second screw (802) between the plate (304a) and the resistive skin (302a), and wherein the inner diameter of the post (812) is adjusted to the diameter of the threaded shank of the second screw (802) and in that the post (812) has an upper pad (812a) bearing against the plate (304a) and a lower pad (812b) bearing against the resistive skin (302a), wherein the hole (814) through which the second screw (802) passes through the plate (304a) is an oblong hole of which the major axis is parallel to a longitudinal direction X.

5. Internal fixed structure (300) according to Claim 4, wherein the faces of the pads (812a-b) that are in contact with the plate (304a) and the resistive skin (302a) are covered with a sliding coating.

6. Propulsion assembly (200) of an aircraft (100), said propulsion assembly (200) having a jet engine (202) with a core (207), a nacelle (204) disposed around the jet engine (202) and wherein the nacelle (204) has an external fixed structure (211) and an internal fixed structure (212, 300) according to one of the preceding claims around the core (207), wherein the two fixed structures delimit between them a secondary duct (210), wherein the bottom skin (302b) is oriented towards the core (207) and wherein the resistive skin (302a) and the thermoacoustic exchanger (304) are oriented towards the secondary duct (210).

7. Aircraft (10) having a propulsion assembly (200) according to the preceding claim.

8. Method for manufacturing an internal fixed structure (300) according to Claim 1, wherein the honeycomb structure (302) is constituted of an external structure (702a) that is around the frame (301) and an internal structure (702b) that is inside the frame (301), said manufacturing method involving:
- a first provision step during which an external structure (702a) is provided,
- a second provision step during which an internal structure (702b) is provided,
- a third provision step during which a frame (301) is provided,
- a fourth provision step during which a resistive skin (302a) is provided,
- a fifth provision step during which a bottom skin (302b) is provided,
- an assembly step during which the resistive skin (302a), the bottom skin (302b), the frame (301), the internal structure (702b) and the external structure (702a) are assembled and fastened, for example by adhesive bonding, and
- a placement step during which the thermoacoustic exchanger (304) is placed in the housing (409) and fastened by the fastening means (306a-b).

9. Manufacturing method according to Claim **8,** wherein it involves, before the assembly step, a pre-assembly step during which the resistive skin (302a) and the frame (301) are fastened to one another.

10. Method for manufacturing an internal fixed structure (300) according to Claim 1, wherein the honeycomb structure (302) is constituted of an external structure (702a) that is around the frame (301) and an internal structure (702b) that is inside the frame (301), said manufacturing method involving:
- a first provision step during which an external structure (702a) is provided,
- a second provision step during which an internal structure (702b) is provided,
- a third provision step during which a frame (301) is provided,
- a fourth provision step during which a resistive skin (302a) is provided,
- a fifth provision step during which a bottom skin (302b) is provided,
- a pre-assembly step during which the bottom skin (302b) and the frame (301) are fastened to one another,
- an assembly step during which the bottom skin (302b)and the frame (301) that are thus pre-assembled, the resistive skin (302a), the internal structure (702b) and the external structure (702a) are assembled and fastened, for example by adhesive bonding, and
- a placement step during which the thermoacoustic exchanger (304) is placed in the housing (409) and fastened by the fastening means (306a-b).

11. Method for manufacturing an internal fixed structure (300) according to Claim 1, wherein the honeycomb structure (302) is constituted of an external structure (702a) that is around the frame (301) and an internal structure (702b) that is inside the frame (301), said manufacturing method involving:
- a first provision step during which an external structure (702a) is provided,
- a second provision step during which an internal structure (702b) is provided,
- a third provision step during which a frame (301) is provided,
- a fourth provision step during which a resistive skin (302a) is provided,
- a fifth provision step during which a bottom skin (302b) is provided,
- a pre-assembly step during which the resistive skin (302a), the frame (301), the internal structure (702b) and the external structure (702a) are assembled and fastened,
- an assembly step during which the resistive skin (302a), the frame (301), the internal structure (702b) and the external structure (702a) that are thus assembled and fastened are assembled and fastened to the bottom skin (302b), and
- a placement step during which the thermoacoustic exchanger (304) is placed in the housing (409) and fastened by the fastening means (306a-b).

12. Method for manufacturing an internal fixed structure (300) according to Claim 1, wherein the honeycomb structure (302) is constituted of an external structure (702a) that is around the frame (301) and an internal structure (702b) that is inside the frame (301), said manufacturing method involving:
- a first provision step during which an external structure (702a) is provided,
- a second provision step during which an internal structure (702b) is provided,
- a third provision step during which a frame (301) is provided,
- a fourth provision step during which a resistive skin (302a) is provided,
- a fifth provision step during which a bottom skin (302b) is provided,
- a pre-assembly step during which the resistive skin (302a) and the frame (301) are assembled and fastened to one another,
- an assembly step during which the resistive skin (302a) and the frame (301) that are thus assembled are assembled and fastened to the internal structure (702b) and the external structure (702a),
- a post-assembly step during which the resistive skin (302a), the frame (301), the internal structure (702b) and the external structure (702a) that are thus assembled are assembled and fastened to the bottom skin (302b), and
- a placement step during which the thermoacoustic exchanger (304) is placed in the housing (409) and fastened by the fastening means (306a-b).
